# EUROPEAN PATENT SPECIFICATION

(11) **EP 3 607 805 B1**
(45) Date of publication and mention of the grant of the patent: **05.06.2024**
(21) Application number: 18714542.0
(22) Date of filing: 06.04.2018
(51) Int. Cl.: B60Q 1/30, H05B 45/58

(54) **ELECTRICAL CIRCUIT FOR ACCESSORY**
ELEKTRISCHE SCHALTUNG FÜR ZUBEHÖR
CIRCUIT ÉLECTRIQUE POUR ACCESSOIRES

(30) Priority: 07.04.2017 EP 17382190
(43) Date of publication of application: 12.02.2020
(73) Proprietor: Enganches y Remolques Aragón, S.L., 50057 Zaragoza (ES)
(72) Inventor: GONZÁLEZ JUANES, Ramiro, 50057 Zaragoza (ES); BENITO MONREAL, Fernando, 50057 Zaragoza (ES); BENITO MONREAL, Nelson, 50057 Zaragoza (ES); RÍOS NERÍN, Alejandro, 50057 Zaragoza (ES); PERFECTO CARCELERO, Raúl, 50057 Zaragoza (ES)
(74) Representative: ZBM Patents - Zea, Barlocci & Markvardsen
(86) International application number: PCT/EP2018/058875
(87) International publication number: WO 2018/185294

(56) References cited:
- EP-A1- 2 000 358
- WO-A2-2014/128472
- DE-A1-102012 102 638

## Description

The present application claims the benefit of European patent application EP17382190.1 filed on April 7th, 2017.

The present disclosure relates to an electrical circuit for illumination of an accessory configured to be coupled to a tow hook of a vehicle. In particular, the present disclosure relates to such an electrical circuit comprising a plurality of LEDs. The present disclosure also relates to such an accessory comprising such an electrical circuit.

### BACKGROUND ART

Tow bars or tow hitches are devices commonly used for connecting a towing vehicle or a tractor vehicle to a trailer. The trailer may thus be pulled by the towing vehicle. Tow hitches may be mounted on the rear part of towing vehicles, e.g. in the area of the rear bumper of a car or a truck, for hooking a trailer. Trailers may be for example caravans, boat trailers or box trailers.

Tow hitches generally have the form of a tow ball which allows inserting a tow ring attached to the trailer to establish a mechanical connection between the towing vehicle and the trailer.

The tow bar may also be used for attaching another type of accessory, such as e.g. a bicycle carrier, a motor bike carrier or a dog carrier. Regardless of whether a trailer or another accessory is coupled to the tow hook, the visibility of the rear side of the vehicle may be compromised. The accessory may include suitable illumination systems, including fog lights, left and right indicator lights, license plate illumination, rear position lights, and brake lights.

Tow hitches frequently therefore also comprise or can be combined with a socket for electrically connecting the electrical system of the towing vehicle to the electrical system of the trailer. This electrical connection enables the transmission of electrical signals between the towing vehicle and the trailer and enables proper illumination of the accessory.

Such electrical sockets comprise electrical connectors connected to electrical cables which in turn are connected the electrical system of the vehicle. The vehicle may include a suitable electrical kit or electrical wiring for this purpose. These electrical connectors may be mounted inside the socket and serve to electrically connect to a plug associated with the trailer. Known electrical connections are formed by e.g. a 7-pin or 13-pin socket in combination with a 7-pin or 13-pin plug of the trailer. Such an electrical connection may supply power from the towing vehicle to the trailer for activating operating lights or other indicators as for example left/right indicators, positioning lights or fog lights.

The electrical contacts are not interchangeable, i.e. each pin of the plug has to be connected to the corresponding pin of the socket. The correct orientation of the plug with the socket results in proper illumination of the accessory.

Known illumination systems comprise incandescent light bulbs. However, light emitting diodes ("LEDs") have emerged as alternatives for illumination. As a general rule, advantages related to LEDs as opposed to incandescent light bulbs include low energy consumption, small size and they are also often considered as aesthetically pleasing.

It has been attempted to provide accessories configured to be coupled to a tow hook (e.g. a bicycle carrier, or a trailer or a cargo carrier) with LED illumination. However, these systems have been unsatisfactory because they require an electrical kit in the towing vehicle that is specifically adapted to LED illumination. When accessories with LED illumination are coupled with an electrical kit adapted to incandescent light bulbs, it has been found that the detection of correct functioning of the LEDs failed, i.e. a user might be warned that a LED was not working or not present, whereas in reality it was. It has also been found that LED illumination would unintendedly light up.

EP 2 000 358 discloses a circuit for supplying power to LED in a trailer. The connection unit has a semiconductor switch for controlling a trailer light e.g. light emitting diode, and switchable by a control device, where the control device communicates with a data network of a drawing vehicle. A resistive unit provides an electrical connection between the semiconductor switch and the trailer light. The resistive unit is connected with a current mirror for determining the current flowing through the unit by collection of electrical parameters.

DE102004045435 discloses a light bulb or LED-headlamp function monitoring device for a motor vehicle, which has a mechanism for detecting that a bulb or headlamp is turned out in an electric circuit. The electric circuit contains an electronic circuit, which detects whether the bulb or the headlamp is integrated. The function or non-function of the bulb or headlamp is established by the electronic circuit.

DE102012102638 discloses a lighting system. The system has a signal input for inputting function data for light units present in vehicle lamps i.e. LEDs. Load simulation units and opening elements i.e. transistors, are arranged in an electric circuit. A signal evaluation unit recognizes whether the electric circuit is in an open condition or a closed condition. A signal path extends from a light control unit to the opening elements for transmitting an opening signal. A shift element having a support function is arranged in the signal path.

The present disclosure provides examples of devices and systems that overcome this problem.

### SUMMARY

According to a first aspect, an accessory that is configured to be coupled to a tow hook of a vehicle is provided, the accessory comprising an electrical circuit for illumination as defined in the claims. The electrical circuit is configured for being coupled to an electrical socket of the vehicle and comprises: a plurality of circuit blocks for different lights of the accessory. At least one of the circuit blocks comprises one or more LEDs in one or more luminous branches, a resistive load in a branch parallel to the luminous branches, and the resistive load being connected to the circuit block through a resistive load switch. The circuit block furthermore comprises a control system for selectively closing the resistive load switch in response to a measurement of electrical current in a first branch connecting a power source with the luminous branches. The control system is configured to disconnect the resistive load when the current through the luminous branches is below a predetermined current threshold, and to connect the resistive load when a diagnostic current is detected in the first branch.

In accordance with this aspect, an electrical circuit is provided on the side of the accessory to be coupled to a tow hook (rather than on the side of the vehicle) that has an additional resistive load. The control system connects and disconnects the resistive load in such a way that a diagnostic current does not cause the LEDs of the accessory to light up, since the current is absorbed by the resistive load. At the same time the resistive load is disconnected when the current through the luminous branches is too small. This would indicate the malfunction of one or more of the LEDs. By disconnecting the resistive load, such a malfunction can be correctly detected.

A diagnostic current may be a small current that is used to detect the presence (or absence) of the accessory. The diagnostic current may also be a small current that is used to check whether the LEDs are functioning properly or not.

The electrical circuit comprises a plurality of circuit blocks for different lights. Making the electrical circuit suitable for LEDs may thus be integrated in circuit boards (PCBs) for each different light or group of lights.

The control system is further configured to connect the resistive load when a current through the luminous branches is detected. In this case, a current through the LEDs means that the LEDs are present and working. By connecting the resistive load, the actual current flowing through the LEDs in the case of a diagnostic current is too small for the LEDs to light up.

In some examples, the switch may be coupled to a current sensor. The current sensor may be configured to sense a voltage drop over a resistor in series with the LEDs, in particular in the first branch.

The luminous branches may comprise a luminous branch switch, and the control system is further configured to selectively connect the luminous branches.

The control system may be configured to disconnect the luminous branches when the diagnostic current is detected. A diagnostic current (as opposed to a current for illumination) may be detected based on e.g. a voltage.

The control system may be configured to detect the diagnostic current when a current with a voltage level below a predetermined threshold is detected in the first branch. If a voltage below a threshold is detected, the luminous branches are disconnected in these examples. The LEDs can thus not light up unintentionally.

The control system is configured to connect the luminous branches when a current with a voltage level above a predetermined threshold is detected in the first branch. A voltage higher than a predetermined threshold may indicate a current for illumination (rather than a diagnostic current).

According to some examples, the control system may be configured to measure a current in the first branch when the luminous branches are connected and to disconnect the resistive load if the measured current is below a predefined current threshold. If the luminous branches are connected, but the current in the first branch is too low, this may indicate that one or more of the LEDs are not working properly.

In some examples, the control system may further be configured to disconnect the luminous branches if the measured current is below the predefined current threshold. If one or more of the LEDs are not working properly, this should be detected by the vehicle. By disconnecting the resistive load and the luminous branches, the absence of current flow can be detected by the vehicle.

In yet a further aspect, an electrical circuit for illumination of an accessory configured to be coupled to a tow hook of a vehicle is provided. The electrical circuit is configured for being coupled to an electrical socket of the vehicle, and comprises a plurality of circuit blocks for different lights of the accessory. The circuit blocks comprise one or more LEDs, and a resistive load arranged parallel to the one or more LEDs. The resistive load is connected to the circuit block through a switch, wherein the switch is configured to selectively close when a current through the one or more LEDs is detected.

In this aspect, an electrical circuit is provided that incorporates an additional electrical load (i.e. one or more electrical resistors) that is only used when the LED is functioning. Herewith, the problem of illuminating LEDs unintentionally is solved. Existing electrical kits on the side of the vehicle send a small electrical current to test if a light is present and working. With incandescent light bulbs, this current is too small for the light bulb to light up, but with LEDs the current is sufficient to light up the LEDs. A similar method is used by electrical kits to detect the presence of an accessory, such as a trailer. Also presence detection could cause LEDs to light up if no special measures are taken. According to this first aspect however, because of the additional resistive electrical load, the current through the LEDs is small enough so that the LEDs do not light up. Also, the resistive load is disconnected when the LED is not present or not working, so that the load does not consume power and therefore does not affect the reliability of the detection of the presence of the LEDs.

The additional resistive load also ensures that a voltage measurement can be made more reliable. It was found that known electrical kits usually determine the presence or functioning of the light bulb by measuring a voltage drop. Because the LED's current is so small, a LED is not reliably detected without the additional resistive load. By including the extra resistive load, the current can become high enough so that a voltage drop can be reliably measured. Increasing the current increases the voltage drop in the resistance used by the driver to perform the voltage comparison measurement.

In some embodiments, the resistive load switch is coupled to a current sensor. Optionally, the current sensor may be configured to sense a voltage drop over a resistor in series with the one or more LEDs, in particular in the first branch. And the circuit block may further include a plurality of diodes in series with the LEDs. The luminous branches or the first branch may comprise these additional diodes. By including a plurality of diodes, the voltage in the circuit block may be raised, when the electrical kit is programmed to inject a predetermined amount of current. The detection of the voltage drop over a resistor in series with a LED may thus be made more reliable.

In some examples, the switch may include a transistor. Specifically, the transistor may be a field effect transistor, and in particular may comprise a MOSFET.

In some examples, the circuit block may further comprise a capacitor in parallel with the one or more LEDs at a source of the circuit block. The capacitor can help reduce noise in the circuit.

In some examples, the electrical circuit may comprise circuit blocks for one or more of brake light, fog light, rear position light, license plate light, left and right indicator lights and reversing light.

The present disclosure provides an accessory configured to be coupled to a tow hook comprising an electrical circuit according to any of the examples disclosed herein.

The accessory may further comprise an electrical plug for coupling with the electrical socket of the vehicle. And the accessory in some examples may be any of the following a trailer, a bike carrier, a cargo box, a motor bike carrier, a ski carrier, or a dog carrier. An accessory is thus provided that can be coupled to a tow hook, and may have an illumination based on LEDs and can be used with prior art electrical kits typically developed for incandescent light bulbs and still is able to reliably detect the presence of the accessory, and to detect functioning of the LEDs or can indicate that a LED is not functioning. The accessory with LED illumination may of course also be used in combination with electrical kits particularly developed for LEDs.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 illustrates an example of a circuit block which may be used in examples of an electrical circuits; and
Figure 2 illustrates one example of a practical implementation of a circuit block according to figure 1;
Figure 3 illustrates an alternative example of a circuit block which may be used in examples of electrical circuits;
Figure 4 illustrates the effect of the additional resistive load in circuit blocks according to the present disclosure; and
Figure 5 illustrates a further example of a circuit block which may be used in examples of electrical circuits.

### DETAILED DESCRIPTION OF EMBODIMENTS

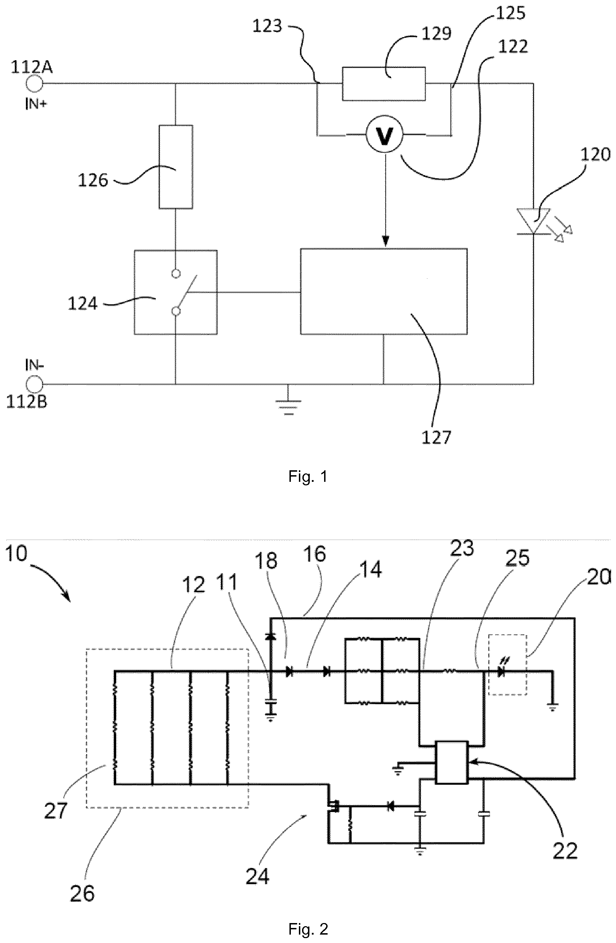

Figure 1 schematically illustrates an example of a circuit block. A plurality of such circuit blocks may be included in an electrical circuit of an accessory.

The power source of the circuit block of figure 1 is indicated with reference sign 112A, 112B. The source may be connected to an electrical kit in a towing vehicle when the plug of an accessory is connected with a socket of the electrical kit.

The positive pole is indicated with reference sign 112A, whereas the negative pole is indicated by 112B. Current flows from positive pole 112A to LED 120 and to negative pole 112B. Although only a single luminous branch with a LED is shown, it should be clear that multiple LEDs might be arranged in series (and also in parallel or in seriesparallel).

A resistor 129 is coupled in series with LED 120 in a first branch connecting the power source with the luminous branch. In this example, a voltmeter 122 is used for measuring a voltage drop from a point 123 upstream from the resistor 129 to a point 125 downstream from the resistor.

The voltmeter 122 may be coupled to a control 127 that controls a switch 124. If a voltage drop is detected by voltmeter 122, this means that current is flowing through the LED 120. This means that a LED is present and the LED is functioning. If there were no LED, no current could flow from the positive pole to the negative pole, and thus the voltmeter would not detect a voltage drop. The current would then be below a predetermined minimum threshold for connecting the resistive load.

The control 127 closes switch 124 if current flow is detected and closes a branch of the electrical circuit parallel to LED 120 and current can thus flow from positive pole 112A to negative pole 112B through this branch. This branch parallel to LED 120 includes a resistor 126. When the resistive load switch 124 is closed, the current used in the circuit block increases to an amount so that the presence and functioning of a LED 120 can reliably be determined. When the switch is open, there is no electrical consumption.

A known electrical kit that may have been originally designed to function with an accessory having incandescent light bulbs can work correctly when LEDs (which work with much lower currents) are present instead of incandescent light bulbs. The switch with the additional resistor(s) increases the current consumption in the circuit block because of the additional current in the branch parallel to the LED, to such a level that a working LED can be detected, thereby avoiding "false negatives", i.e. it is avoided that the system indicates that there is no functioning LED while in reality there is. At the same time, there are no "false positives" (this would be the case that the system thinks the LED is functioning while in reality it is not) because the current consumption disappears when the LED is not working or missing.

Figure 2 illustrates one example of a practical implementation of a circuit block according to figure 1. The example for the circuit block may be e.g. for the left or right indicator lights of the accessory. But the same circuit block may be used e.g. for a brake light, or reversing light. Depending on the light that is controlled, the characteristics of e.g. capacitors, resistors etc. may be varied.

The circuit block 10 includes a power source 12, which may receive current from the electrical kit provided in a vehicle. The power source 12 may thus be the electrical socket of the vehicle to which the accessory is connected. A luminous branch 14 including a LED 20 is shown, as well as a further branch 16 in parallel with branch 14. A capacitor 11 may be provided at the source to reduce noise in the circuit block.

The branch 12 including the LED 20 may include a plurality of diodes 18. The effect of these diodes is of course to avoid reverse current flow, but also to increase the voltage through branch 14. Known electrical kits may be programmed to detect the presence and functioning of a LED by injecting a current of predetermined level. The inclusion of additional diodes increases the voltage in order to inject the current of the same predetermined level so that a voltage drop caused is sufficient for the control electronics to operate. The function of the additional diodes, which are evidently not light emitting diodes, is to avoid the LEDs to light up at a low voltage. The voltage at which the LEDs light up is raised by arranging the diodes in series.

The branch 16 in parallel to first branch 14 includes a resistive load 26 comprising a plurality of resistors 27. The resistive load 26 is coupled with the remainder of branch 16 through a switch 24, which may be e.g. a MOSFET. The switch is only closed if a sufficient voltage drop is detected between points 23 and 25 on an upstream and a downstream side from a resistor. The current sensor 22, by measuring the voltage drop, may indicate the presence and proper functioning of the LED 20. If the LED is not present, or if the LED does not work well, then no current will be detected. If no current is detected, then the switch 24 will be opened, and the resistive load will be disconnected and there is thus no electrical consumption when the LED is not present or not working well.

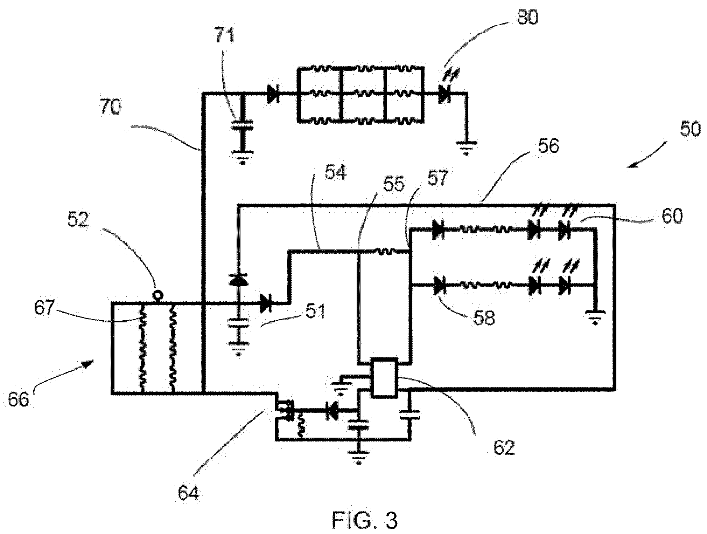

An alternative example of a circuit block which may be used in examples of electrical circuits is schematically illustrated in figure 3. In the example of figure 3, a circuit block 50 includes a plurality of LEDs 60 in parallel luminous branches which may illuminate a license plate. The license plate illumination is generally coupled with the rear position light 80. Either both are illuminated, or none of them is.

The circuit block 50 includes source 52 and parallel branches. Similarly as shown in figures 1 and 2, the branch of the license plate light includes a resistive load 66 including a plurality of resistors 67 coupled with resistive load switch 64. The current sensor 62 measures a voltage drop between points 55 and 57 over a resistor in series with the LEDs 60. If the LEDs are present and working, a current will be detected. On the other hand, if the LEDs are not present or not working a current will not be detected. The switch will accordingly be opened or closed using an appropriate control system, the current sensor 62 providing the input for the control system.

Also similarly as before, at the source 52, a capacitor 51 may be provided to reduce noise. Similarly, a capacitor 71 may be arranged in the branch 70.

In parallel with the license plate illumination, the rear position light 80 is provided. In this branch 70, there is no specific additional resistive load or a current sensor. A single additional resistive load is sufficient for the correct functioning of the group. Although alternatively, these elements (switch and additional resistor(s) might be provided in the branch of the rear position light, rather than in the branch of the license plate light.

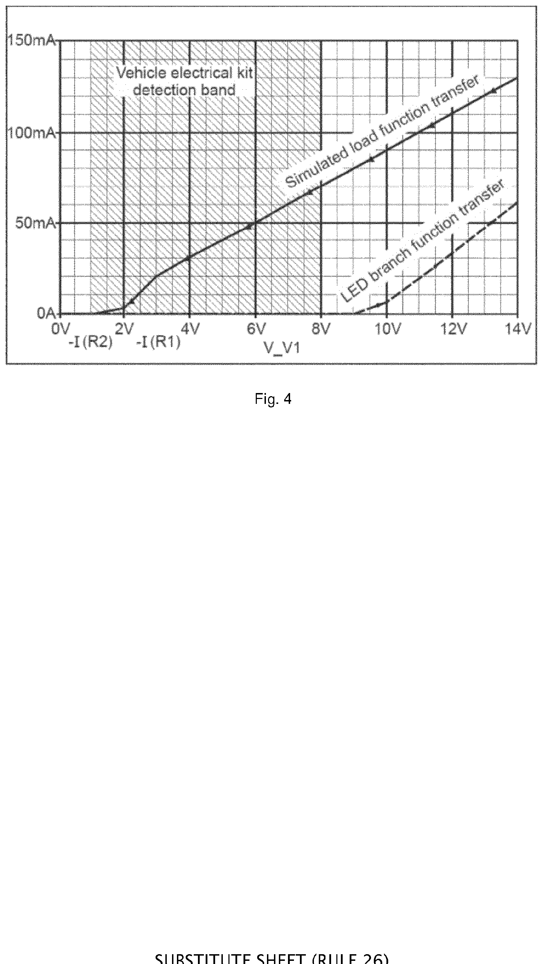

Figure 4 schematically indicates the effect of the use of the additional resistive load in parallel to the LEDs. The effect of the additional resistive load is that the current required to light up the LEDs is outside the band of diagnostic currents of the vehicle electrical kit. The same figure also illustrates that the additional resistive is to be disconnected if indeed the LEDs are not working properly.

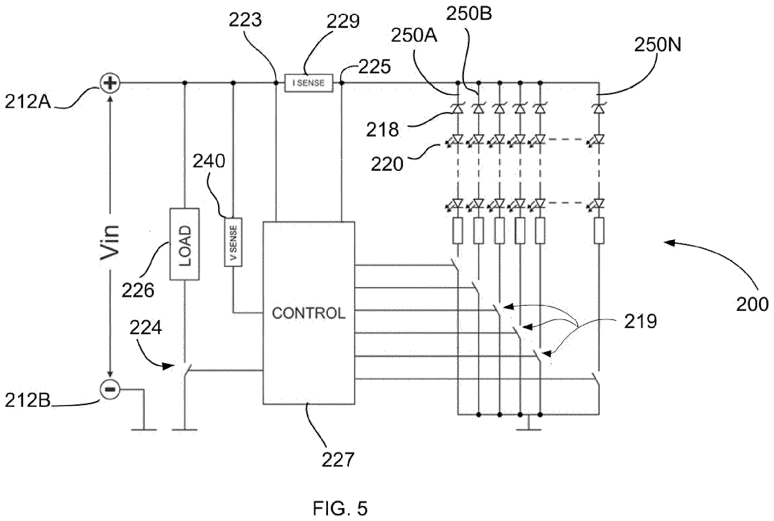

In the examples of figures 1-3, the additional resistive load is by default not connected (i.e. the switch is open) and only is connected if a current through the luminous branches is detected. A further example is shown in figure 5, in which by default the resistive load is connected.

Figure 5 schematically illustrates a circuit block with a power source 212 with positive pole 212A and negative pole 212B. The source may be in particular the electrical socket of the vehicle to which the accessory is attached.

The circuit block 200 of this example comprises a plurality of luminous branches 250A, 250B, ... 250N. In this example, each of the luminous branches comprises one or more LEDs 220. In series with the LEDS, diodes 218 may be arranged. In this example, the diodes 218 are Zener diodes. The function of the additional diodes is to raise the voltage at which the LEDs can light up. Optionally, the luminous branches may also include resistances.

Each of the luminous branches further includes a switch 219 so that the luminous branches can be individually connected and disconnected. The plurality of luminous branches with switches allows programming of individual branches to be connected consecutively and thereby an incremental light sequence can be achieved. An incremental light sequence is meant to indicate that over a short period of time, the number of lights that are activated increases. Such a sequence may be used e.g. for left and right indicator lights.

Similarly as in previous examples, a current sensor 229 may be included, which may measure a voltage drop between points 223 (upstream) and 225 (downstream) of a resistor. The result of the current measurement may be used as input for control 227. Alternative current sensors, e.g. ammeters may be used.

Further input for the control system in this example comes from a voltage meter 240 to measure a voltage of the signal received from the power source. In a branch parallel to the luminous branches, a resistive load 226 is arranged. A resistive load switch 224 under control of control 227 can be used to selectively open and close the resistive load switch and thereby disconnect and connect the resistive load 226 respectively.

This particular circuit block may function in the following manner: by default the additional resistive load 226 is connected, whereas by default the luminous branch switches 219 of the luminous branches are open and the luminous branches are thus disconnected.

When the vehicle emits a diagnostic current to measure the presence and/or functioning of the lights, this diagnostic current will have a voltage that is below a predetermined threshold. This voltage is measured by sensor 240 and supplied to control 227. In response, the control will not act on the switches: the resistive load 226 is connected and the luminous branches are not. False positives are avoided since the LEDs are disconnected and thus cannot inadvertently light up.

When a driver activates a light, the voltage measured by sensor 240 will be above the predetermined threshold. In response, the control 227 will close one or more luminous branch switches 219. Whether one or multiple of the luminous branches are closed and how this will vary over time will depend on the programming for a specific light function. For specific lights, a sequential activation may be preferred, whereas for other lights, simply all LEDs are to be activated at the same time.

When the luminous branches that are to be connected in accordance with the programming are in fact connected, a current sensor 229 may provide the measurement of current in the branch connecting the power source with the luminous branches to the control 227. If this current is below an expected value, this may indicate the malfunction of one or more of the LEDs or luminous branches. In response, the resistive load switch 224 may be opened and thereby the resistive load may be disconnected. Furthermore, the switches 219 may be opened. As a result, no electrical load is connected in circuit block 200 and the electrical kit of the vehicle to which the accessory is coupled can correctly detect the malfunctioning. False negatives can thus be avoided as well.

As in previous examples, both false negatives and false positives are avoided by combining:
- Disconnecting the additional resistive load parallel to the LEDs when the current through the LEDs is below an expected level; and
- Connecting the additional resistive load in the case of a diagnostic current.

It should be clear that the circuit block of figure 5 (similarly to the circuit blocks of figures 1 and 2) may be used for the left or right indicator lights of the accessory or for a brake light, or reversing light. Depending on the light that is controlled, the characteristics of e.g. capacitors, resistors, diodes etc. may be varied. Additionally, it should be clear a circuit block as in figure 5 may be used in a similar fashion as for figure for the combination license plate illumination and rear position lights.

The scope of the present invention is determined by the claims that follow.

## Claims

1. An accessory configured to be coupled to a tow hook of a vehicle, the accessory comprising an electrical circuit for illumination of the accessory, the electrical circuit configured for being coupled to an electrical socket of the vehicle, and the electrical circuit comprising
a plurality of circuit blocks for different lights of the accessory, at least one of the circuit blocks (200) comprising
one or more LEDs (220) in each of a plurality of luminous branches (250A, 250B,..., 250N),
a resistive load (226) in a branch parallel to the luminous branches, the resistive load being connected to the circuit block through a resistive load switch (224),
wherein each of the luminous branches further includes a switch (219) so that the luminous branches can be individually connected and disconnected,
a current sensor (229);
a voltage meter (240) to measure a voltage of the signal received from an electrical power source (212);
and
a control system (227) for selectively closing the resistive load switch (224) in response to a measurement of electrical current in a first branch connecting the electrical power source (212) with the luminous branches,
the accessory being **characterized in that** the control system (227) is configured
to close the plurality of luminous branch switches (219) in a sequential activation when a voltage measured by the voltage meter (240) is above a predetermined threshold,
to disconnect the resistive load (226) when the current through the luminous branches is below a predetermined current threshold and when the plurality of luminous branches are connected, and
to connect the resistive load (226) when a diagnostic current is detected in the first branch, wherein the control system is configured to detect the diagnostic current when a current with a voltage level below a predetermined threshold is detected in the first branch.

2. The accessory of claim 1, wherein the control system of the electrical circuit is configured to connect the resistive load (226) when a current through the luminous branches is detected.

3. The accessory of claim 2, wherein the control system is coupled to the current sensor (229) configured to sense a voltage drop over a resistor in series with the one or more LEDs (220).

4. The accessory of claim 1, wherein the control system is configured to disconnect the luminous branches when the diagnostic current is detected.

5. The accessory of any of claims 1 - 4, wherein the resistive load switch includes a transistor.

6. The accessory of any of claims 1-5, wherein the luminous branches or the first branch comprise a plurality of diodes in series with the one or more LEDs.

7. The accessory of any of claims 1 - 6, comprising circuit blocks (200) for one or more of brake light, fog light, rear position light, license plate light, left and right indicator lights and reversing light.

8. The accessory of any of claims 1-7, comprising a single circuit block for a license plate light and for a rear position light, wherein the single circuit block for the license plate light and for the rear position light comprises a resistive load in a branch parallel to the one or more luminous branches of either the license plate light or the rear position light.

9. The accessory of any of claims 1 - 8, further comprising an electrical plug for coupling with the electrical socket of the vehicle.

10. The accessory of any of claims 1-9, wherein the accessory is one of the following: a trailer, a bike carrier, a cargo box, a motor bike carrier, a ski carrier, or a dog carrier.

## Patentansprüche

1. Ein Zubehörteil, das konfiguriert ist, um mit einem Abschlepphaken eines Fahrzeugs gekoppelt zu werden, wobei das Zubehörteil eine elektrische Schaltung zum Beleuchten des Zubehörteils umfasst, wobei die elektrische Schaltung konfiguriert ist, um mit einer elektrischen Steckdose des Fahrzeugs gekoppelt zu werden, und die elektrische Schaltung Folgendes umfasst
eine Vielzahl von Schaltungsblöcken für verschiedene Leuchten des Zubehörteils, wobei mindestens einer der Schaltungsblöcke (200) Folgendes umfasst:
eine oder mehrere LEDs (220) in jedem einer Vielzahl von leuchtenden Zweigen (250A, 250B,..., 250N),
eine Widerstandslast (226) in einem Zweig parallel zu den leuchtenden Zweigen, wobei die Widerstandslast über einen Widerstandslastschalter (224) mit dem Schaltungsblock verbunden ist,
wobei jeder der leuchtenden Zweige ferner einen Schalter (219) beinhaltet, so dass die leuchtenden Zweige einzeln verbunden und getrennt werden können,
einen Stromsensor (229);
einen Spannungsmesser (240) zum Messen einer Spannung des von einer elektrischen Leistungsquelle (212) empfangenen Signals;
und
ein Steuersystem (227) zum selektiven Schließen des Widerstandslastschalters (224) als Reaktion auf eine Messung des elektrischen Stroms in einem ersten Zweig, der die elektrische Leistungsquelle (212) mit den leuchtenden Zweigen verbindet,
wobei das Zubehörteil **dadurch gekennzeichnet ist, dass** das Steuersystem (227) konfiguriert ist
zum Schließen der Vielzahl von Leuchtzweigschaltern (219) in einer sequentiellen Aktivierung, wenn eine durch den Spannungsmesser (240) gemessene Spannung über einem vorbestimmten Schwellenwert liegt,
die Widerstandslast (226) abzuschalten, wenn der Strom durch die leuchtenden Zweige unter einem vorbestimmten Stromschwellenwert liegt und wenn die Vielzahl von leuchtenden Zweige verbunden sind, und
um die Widerstandslast (226) zu verbinden, wenn ein Diagnosestrom in dem ersten Zweig erfasst wird, wobei das Steuersystem dazu konfiguriert ist, den Diagnosestrom zu erfassen, wenn ein Strom mit einem Spannungspegel unter einem vorbestimmten Schwellenwert in dem ersten Zweig erfasst wird.

2. Das Zubehörteil von Anspruch 1, wobei das Steuersystem der elektrischen Schaltung dazu konfiguriert ist, die Widerstandslast (226) zu verbinden, wenn ein Strom durch die leuchtenden Zweige erfasst wird.

3. Das Zubehörteil von Anspruch 2, wobei das Steuersystem an den Stromsensor (229) gekoppelt ist, der dazu konfiguriert ist, einen Spannungsabfall über einem Widerstand in Reihe mit der einen oder den mehreren LEDs (220) zu erfassen.

4. Das Zubehörteil von Anspruch 1, wobei das Steuersystem dazu konfiguriert ist, die leuchtenden Zweige zu trennen, wenn der Diagnosestrom erfasst wird.

5. Das Zubehörteil von einem der Ansprüche 1 bis 4, wobei der Widerstandslastschalter einen Transistor beinhaltet.

6. Das Zubehörteil von einem der Ansprüche 1 bis 5, wobei die leuchtenden Zweige oder der erste Zweig eine Vielzahl von Dioden in Reihe mit der einen oder den mehreren LEDs umfassen.

7. Das Zubehörteil von einem der Ansprüche 1 bis 6, umfassend Schaltungsblöcke (200) für eines oder mehrere von Bremslicht, Nebellicht, hinterem Positionslicht, Kennzeichenleuchten, linkem und rechtem Fahrtrichtungsanzeiger und Rückfahrlicht.

8. Das Zubehörteil von einem der Ansprüche 1 bis 7, umfassend einen einzelnen Schaltungsblock für eine Kennzeichenleuchte und für eine hintere Positionsleuchte, wobei der einzelne Schaltungsblock für die Kennzeichenleuchte und für die hintere Positionsleuchte eine Widerstandslast in einem Zweig parallel zu dem einen oder den mehreren leuchtenden Zweigen entweder der Kennzeichenleuchte oder der hinteren Positionsleuchte umfasst.

9. Das Zubehörteil von einem der Ansprüche 1 bis 8, ferner umfassend einen elektrischen Stecker zum Koppeln mit der elektrischen Steckdose des Fahrzeugs.

10. Das Zubehörteil von einem der Ansprüche 1 bis 9, wobei das Zubehörteil eines der folgenden ist: ein Anhänger, ein Fahrradträger, eine Frachtbox, ein Motorradträger, ein Skiträger oder ein Hundeträger.

## Revendications

1. Un accessoire configuré pour être couplé à un crochet de remorquage d'un véhicule, l'accessoire comprenant un circuit électrique pour l'éclairage de l'accessoire, le circuit électrique étant configuré pour être couplé à une prise électrique du véhicule, et le circuit électrique comprenant
une pluralité de blocs de circuit pour différentes lumières de l'accessoire, au moins l'un des blocs de circuit (200) comprenant
une ou plusieurs DEL (220) dans chacune d'une pluralité de branches lumineuses (250A, 250B,... , 250N),
une charge résistive (226) dans une branche parallèle aux branches lumineuses, la charge résistive étant connectée au bloc de circuit par l'intermédiaire d'un commutateur de charge résistive (224),
dans lequel chacune des branches lumineuses comprend en outre un commutateur (219) de sorte que les branches lumineuses peuvent être individuellement connectées et déconnectées,
un capteur de courant (229) ;
un voltmètre (240) pour mesurer une tension du signal reçu d'une source d'alimentation électrique (212) ;
et
un système de commande (227) pour fermer sélectivement l'interrupteur de charge résistif (224) en réponse à une mesure de courant électrique dans une première branche connectant la source d'alimentation électrique (212) aux branches lumineuses,
l'accessoire étant **caractérisé en ce que** le système de commande (227) est configuré
pour fermer la pluralité de commutateurs de dérivation lumineux (219) dans une activation séquentielle lorsqu'une tension mesurée par le voltmètre (240) est supérieure à un seuil prédéterminé,
pour déconnecter la charge résistive (226) lorsque le courant à travers les branches lumineuses est inférieur à un seuil de courant prédéterminé et lorsque la pluralité de branches lumineuses sont connectées, et
pour connecter la charge résistive (226) lorsqu'un courant de diagnostic est détecté dans la première branche, dans lequel le système de commande est configuré pour détecter le courant de diagnostic lorsqu'un courant avec un niveau de tension inférieur à un seuil prédéterminé est détecté dans la première branche.

2. L'accessoire de la revendication 1, dans lequel le système de commande du circuit électrique est configuré pour connecter la charge résistive (226) lorsqu'un courant à travers les branches lumineuses est détecté.

3. L'accessoire de la revendication 2, dans lequel le système de commande est couplé au capteur de courant (229) configuré pour détecter une chute de tension sur une résistance en série avec la ou les DEL (220).

4. L'accessoire de la revendication 1, dans lequel le système de commande est configuré pour déconnecter les branches lumineuses lorsque le courant de diagnostic est détecté.

5. L'accessoire de l'une quelconque des revendications 1 à 4, dans lequel le commutateur de charge résistif comprend un transistor.

6. L'accessoire de l'une quelconque des revendications 1 à 5, dans lequel les branches lumineuses ou la première branche comprennent une pluralité de diodes en série avec la ou les DEL.

7. L'accessoire de l'une quelconque des revendications 1 à 6, comprenant des blocs de circuit (200) pour un ou plusieurs parmi le feu de freinage, le feu antibrouillard, le feu de position arrière, le feu de plaque d'immatriculation, les feux indicateurs gauche et droit et le feu de marche arrière.

8. L'accessoire de l'une quelconque des revendications 1 à 7, comprenant un bloc de circuit unique pour un feu de plaque d'immatriculation et pour un feu de position arrière, dans lequel le bloc de circuit unique pour le feu de plaque d'immatriculation et pour le feu de position arrière comprend une charge résistive dans une branche parallèle à la ou aux branches lumineuses soit du feu de plaque d'immatriculation soit du feu de position arrière.

9. L'accessoire de l'une quelconque des revendications 1 à 8, comprenant en outre une fiche électrique pour le couplage avec la prise électrique du véhicule.

10. L'accessoire de l'une quelconque des revendications 1 à 9, dans lequel l'accessoire est l'un des suivants : une remorque, un porte-vélo, une boîte de chargement, un porte-vélo à moteur, un porte-ski ou un porte-chien.
